# EUROPEAN PATENT APPLICATION

(11) **EP 1 835 431 A1**
(43) Date of publication of application: **19.09.2007**
(21) Application number: 07104029.9
(22) Date of filing: 13.03.2007
(51) Int. Cl.: G06F 21/00, G06F 21/20

(54) **Authentication device and method of controlling the same, electronic equipment equipped with authentication device control, program and recording medium recorded with program**

(30) Priority: 15.03.2006 JP 2006071848
(71) Applicant: OMRON CORPORATION, Kyoto-shi, Kyoto 600-8530 (JP)
(72) Inventor: Kakiuchi, Takashi, Kyoto Kyoto 600-8530 (JP); Tada, Yui, Kyoto Kyoto 600-8530 (JP); Senga, Masahiro, Kyoto Kyoto 600-8530 (JP)
(74) Representative: Brykman, Georges

(57) **Abstract**

The present invention aims to effectively prevent spoofing in authentication and maintain convenience of the user. In a face authentication unit of the portable telephone, the face image checking part checks the face image of the person to be authenticated, which is acquired by a face image acquiring part through a photographing unit, with face feature information contained in a face feature DB of the storage unit and calculates the matching degree. A threshold value determining section determines the threshold value by searching the evaluation DB based on the position information of the own device acquired by the position information acquiring section through the GPS receiver. An authenticating section compares the matching degree calculated by the face image checking section and the threshold value determined by the threshold value determining section, and determines success and failure of the face authentication.

## Description

### BACKGROUND OF THE INVENTION

### 1. Field of the Invention

The present invention relates to an authentication device for determining success and failure of the authentication based on authentication input information input from the person to be authenticated according to a threshold value and method of controlling the same, an electronic equipment equipped with the authentication device, an authentication device control program, and a recording medium recorded with the program. In particular, the present invention relates to an authentication device for the living body authentication such as face authentication.

### 2. Description of the related art

Recently, the communication network is rapidly becoming more sophisticated with advancement of digital technique as can be seen in wide spread use of the internet, start of digital broadcast, and mobile revolution. Among them, the portable telephone in the field of mobiles is becoming multi-functional and more sophisticated, and thus contain great amount of personal information. Currently, electronic information and image information can be sent and received through wired or wireless communication network, and furthermore, electronic commercial transaction such as commodity trading, bank settlement, stock trade etc. can be performed using the portable telephone.

Therefore, the opportunity to use the portable telephone regardless of time and location increases as the portable telephone becomes multi-functional and more sophisticated. On the other hand, as the opportunity to use the portable telephone regardless of time and location increases, the chances of the portable telephone being stolen while moving, or getting lost by carelessness and falling into the hands of others increase.

Thus, the demand to strengthen the security is increasing to protect information having high confidentiality when the portable telephone gets lost or stolen. In particular, ensuring of security is a prerequisite when incorporating the function of electronic commercial transaction in the portable telephone. To respond to such demand, living body authentication in which ensuring of security is easier compared to the conventional personal identification number and password is proposed. Among them, face authentication is often adopted since resistance is small as with the identification method of another person normally performed by people in ordinary living, it can be incorporated with small investment as the portable telephone equipped with an imaging element such as CCD (Charge Coupled Device) camera and the like is being widely used etc,
[Patent document 1] Japanese Laid-Open Patent Publication No. 2003-248661 (date of publication September 5, 2003)
[Patent document 2] Japanese Laid-Open Patent Publication No. 2005-149527 (date of publication June 9, 2005)
[Patent document 3] Japanese Laid-Open Patent Publication No. 2002-183734 (date of publication June 28, 2002)
[Patent document 4] Japanese Laid-Open Patent Publication No. 2003-122443 (date of publication April 25, 2003)
[Patent document 5] Japanese Laid-Open Patent Publication No. 2004-134989 (date of publication April 30, 2004)
[Patent document 6] Japanese Laid-Open Patent Publication No. 2005-157979 (date of publication June 16, 2005)

### SUMMARY OF THE INVENTION

However, the problem of "spoofing" in which a stranger passes oneself as the person in question always exists not only in the living body authentication but also in other authentication techniques. For example, spoofing is easily carried out with passwords and personal identification number if the numbers are leaked through peeping etc. Reports have been made that spoofing by pseudo-fingers is possible even in fingerprint authentication that is considered to have a relatively high security. In face authentication, spoofing is easily carried out by using photographs since authentication is performed based on images.

A method of providing authentication only when degree of matching with the registered data is high with stricter authentication, that is, with stricter determination threshold value or internal parameter is considered to prevent spoofing. However, in this method, the possibility of being determined as not the person in question as a result of authentication although he/she is the person in question is high, which lowers the convenience of the legitimate user (hereinafter referred to simply as "user").

The present invention, in view of the above problem, aims to provide an authentication device etc. for effectively preventing spoofing and maintaining convenience of the user.

In order to achieve the above aim, an authentication device according to the present invention relates to an authentication device for determining success and failure of the authentication based on authentication input information input from a person to be authenticated according to a threshold value; the authentication device including a position information acquiring unit for acquiring position information of the own device; and a threshold value determining unit for acquiring authenticated position information or position information of the own device when the authentication input information is input from the position information acquiring unit, and determining the threshold value based on the acquired authenticated position information.

Specifically, the authentication device according to the present invention further includes, in the above configuration, a storage unit for storing a factor DB that manages factor information or information acting as factors when the threshold determining unit determines the threshold value in association with the position information of the own device; where the threshold value determining unit acquires the authenticated position information from the position information acquiring unit, acquires the factor information corresponding to the acquired authenticated position information from the factor DB, and determines the threshold value using the acquired factor information.

A method of controlling the authentication device according to the present invention is a method of controlling an authentication device for determining success and failure of authentication based on authentication input information input from a person to be authenticated according to a threshold value; the method including the steps of acquiring authenticated position information or position information of own device when the authentication input information is input; and determining the threshold value based on the acquired authenticated position information.

In this case, an example of the authentication input information includes living body information such as face image, fingerprint image etc., personal information such as answers to a plurality of questions only the user has the answer to, and the like. Further, the threshold value is set to matching degree of the living body information, percentage the questions are answered correctly and the like.

According to above configuration and method, the threshold value of the authentication can be changed according to the position of its device. Therefore, strict authentication is performed by setting the threshold value high at locations where the possibility its own device exists is low, thereby effectively preventing spoofing. Furthermore, lenient authenticated is performed by setting the threshold value low at locations where the possibility its own device exists is high, thereby maintaining the convenience of the user.

The occurrence frequency of an accident caused by spoofing generally differs among regions. The factor DB may be initialized in time of shipment based on the general information.

In the authentication device according to the present invention, an update unit for updating the factor information in the factor DB may be further arranged. Spoofing is effectively prevented and convenience of the user is maintained at satisfactory accuracy since the factor information based on specific information such as behavior of the user can be changed by updating the factor information.

The update unit may perform updating based on the instruction from the user.

In the authentication according to the present invention, the update unit updates the factor information associated with the position information of the own device to factor information reflecting the frequency the own device has visited the position. In this case, the factor information complying with the behavior of the user can be automatically changed by changing the factor information based on the frequency its own device has visited the position. Therefore, spoofing is effectively prevented, and convenience of the user is maintained at satisfactory accuracy without placing a burden on the user.

The possibility of the spoofing being carried out is considered to become higher the farther the user moves away from the position the user performed the authentication.

In the authentication device according to the present invention, a storage unit for storing last authenticated position information indicating the position the authentication was successful the last time is further arranged; where the threshold value determining unit acquires the authenticated position information from the position information acquiring unit, and determines the threshold value based on the acquired authenticated position and a distance from the last authenticated position stored in the storage unit. In this case, spoofing is effectively prevented at satisfactory accuracy while maintaining convenience of the user since the threshold value can be changed according to the distance from the last authenticated position.

The occurrence frequency of an accident caused by spoofing generally differs among period of time. The period of time the authentication is performed differs among users. The possibility of the spoofing being carried out is considered to become higher the more the time elapses from the time the user performed the authentication.

Therefore, in the authentication device according to the present invention, time information acquiring unit for acquiring time information is further arranged; where the threshold value determining unit acquires the authenticated position information from the position information acquiring unit, acquires authenticated time information indicating input time of the authentication input information from the time information acquiring unit, and determines the threshold value based on the acquired authenticated position information and the authenticated time information. In this case, the convenience of the user is maintained and spoofing is effectively prevented at satisfactory accuracy since the threshold value can be changed according to the position of its own device and the authenticated time.

In the authentication device according to the present invention, a storage unit for storing last authenticated position information and last authenticated time information indicating position and time the authentication was successful the last time is further arranged; wherein the threshold value determining unit acquires the authenticated position information and the authenticated time information from the position information acquiring unit and the time information acquiring unit, and determines the threshold value based on distance between the acquired authenticated position and last authenticated position, and time period between the acquired authenticated time and last authenticated time. In this case, the convenience of the user is maintained and spoofing is effectively prevented at satisfactory accuracy since the threshold value can be changed by the distance from the last authenticated position and the time from the authenticated time.

In the authentication device according to the present invention, an output unit for outputting at least one of result information of the authentication and the authentication input information is further arranged. The output unit may output the information to the storage unit, or may transmit the information to the external server. Further, the authentication result information preferably contains authenticated position information.

In this case, early detection and prevention of spoofing can be expected since investigation of when spoofing is carried out is easily performed based on the output authentication result information and/or authentication input information.

The user may be one or a plurality of people. If there is a plurality of users, the factor DB is stored in the storage unit for each user.

An electronic equipment transported by a moving body is provided, and effects similar to the above are obtained as long it is the electronic equipment including the authentication device of the above configuration. In this case, the moving body may be human or vehicle. That is, the electronic equipment according to the present invention includes portable electronic equipment, vehicle mounted electronic equipment and the like.

Each unit of the authentication device can be functioned on a computer by an authentication device control program. Furthermore, the authentication device control program can be executed on an arbitrary computer by storing the authentication device control program on a computer readable recording medium.

Therefore, the authentication device according to the present invention has advantages of effectively preventing spoofing and maintaining convenience of the user since the threshold value of the authentication can be changed according to the position of its own device.

### BRIEF DESCRIPTION OF THE DRAWINGS

FIG. 1 shows a block diagram showing a schematic configuration of a face authentication unit and various data stored in a storage unit in a portable telephone of one embodiment of the present invention;
FIG. 2 shows a front view showing the outer appearance of the portable telephone;
FIG. 3 shows a block diagram showing the schematic configuration of the portable telephone;
FIG. 4 shows a block diagram showing a schematic configuration of a threshold value determining section in the face authentication unit and the evaluation DB stored in the storage unit, and a configuration related to the threshold value determining section and the evaluation DB;
FIG. 5 shows a view showing in a table form one example of a data structure common to initial setting evaluation DV, user setting evaluation DB, and frequency setting evaluation DB in the evaluation DB;
FIG. 6 shows a view showing in a table form one example of a data structure of an authentication history DB stored in the storage unit; and
FIG. 7 is a flow chart illustrating the processing operation in the portable telephone.

### DETAILED DESCRIPTION OF THE PREFERRED EMBODIMENTS

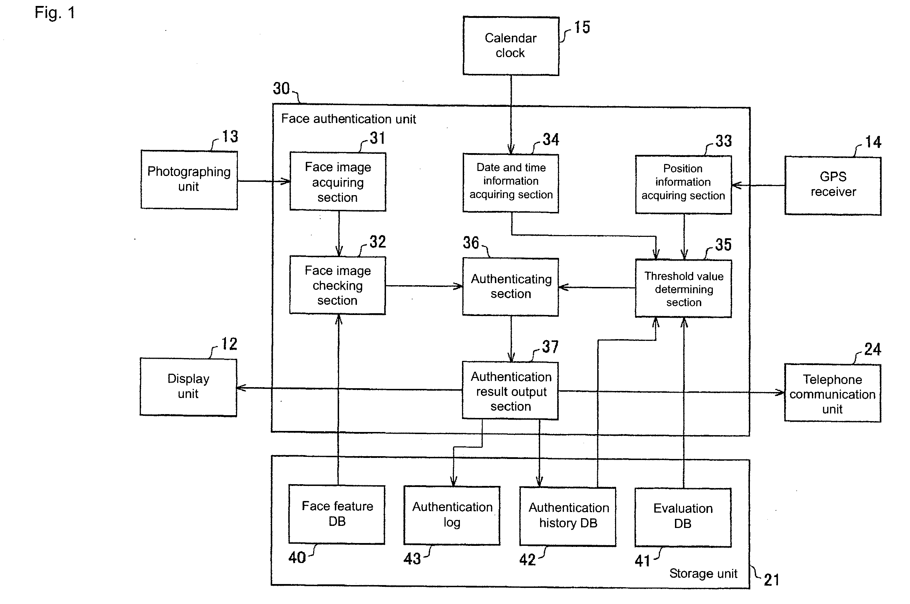

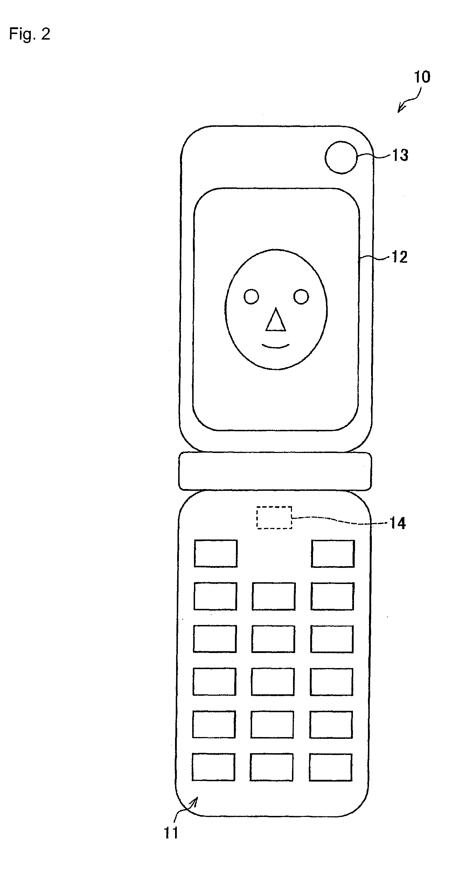

One embodiment of the present invention will now be described with reference to FIGS. 1 to 7. FIG. 2 shows the outer appearance of the portable telephone of the present embodiment. As shown in the figure, the portable telephone (electronic equipment) 10 includes, on the main surface side, an operation unit 11 for accepting the operation of the user, a display unit 12 for displaying various information, and a photographing unit 13 for photographing the subject such as user. Although not shown, the portable telephone antenna and the GPS (Global Positioning Systems) antenna are arranged in the housing of the portable telephone 10.

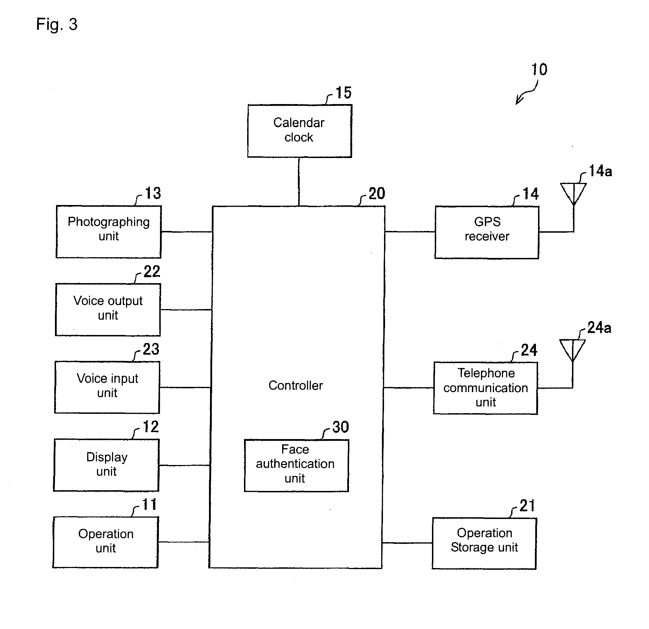

In the present embodiment, the portable telephone 10 incorporates a face authentication unit (authentication device) 30 (see FIG. 3) for performing face authentication using the face image (authentication input information) of the person to be authenticated photographed with the photographing unit 13, and a GPS receiver 14 for acquiring the position information of its own device. The face authentication unit 30 determines the threshold value that acts as the determination reference for success and failure of face authentication in the face authentication unit 30 based on the position information of the portable telephone 10. Thus, the authentication can be performed more strictly by setting the threshold value high at locations where the possibility the portable telephone 10 exists is low, thereby effectively preventing spoofing. Further, the possibility that the legitimate user may not be authenticated is reduced by setting the threshold value low at locations where the possibility the portable telephone 10 exists is high, thereby maintaining the convenience of the user.

In the present embodiment, the portable telephone 10 acquires the position information using the GPS, but may acquire the position information of the base station communicating with its own device from the base station and determine the position of its own device. A plurality of base stations that can communicate with the portable telephone 10 may be detected, and the position information may be acquired from the external server that calculates the position information of the portable telephone 10 based on the position information of the plurality of detected base stations.

FIG. 3 shows a schematic configuration of the portable telephone 10. As shown in the figure, the portable telephone 10 has a configuration including the operation unit 11, the display unit 12, the photographing unit 13, the GPS receiver 14, a controller 20, a storage unit 21, a voice output unit 22, a voice input unit 23, and a telephone communication unit 24.

The operation unit 11 accepts various inputs from the user, and is configured by pointing device such as input button, keyboard, ten key, mouse etc., touch panel, and other input devices. The operation unit 11 converts the information operated by the user to operation data, and transmits the data to the controller 20.

The display unit 12 is configured by display device such as LCD (liquid crystal display element), CRT (cathode ray tube), plasma display etc. The display unit 12 displays and outputs various information such as character and image based on the display data received from the controller 20.

The photographing unit 13 is interiorly mounted with digital camera including lens group, aperture, imaging element and the like. CCD, CMOS (Complementary Metal-oxide Semiconductor) image sensor etc. are examples of the imaging element. The photographing unit 13 photographs the subject to acquire the photographed image, and converts the photographed image to the data of the photographed image and transmits the data to the controller 20.

The GPS receiver 14 receives a wireless signal from the GPS satellite via the GPS antenna, and processes the received wireless signal. The GPS receiver 14 transmits the processed signal to the controller 20.

A calendar clock 15 measures the current date and time, and transmits the date and time information indicating the measured current date and time to the controller 20. The calendar clock 15 also desirably measures the current month and year. The date and time of the calendar clock 15 may be set by operating the operation unit 11 by the user, and may be automatically set by acquiring the accurate time information from the time server through the communication network.

The controller 20 collectively controls the operation of various configurations described above in the portable telephone 10. The controller 20 is configured by a computer including CPU (central processing unit) and memory. The operation control of various configurations is performed by having the computer execute the control program. The program may be in the form used by reading that recorded on the removable media such as flash memory, or may be in the form used by reading that installed in hard disc etc. Furthermore, a form of downloading the program through the telephone communication unit 24 and installing the program on the hard disc etc. and executing the same is also considered. The details of the controller 20 will be hereinafter described.

The storage unit 21 is configured by a non-volatile storage device such as hard disc. The content stored in the storage unit 21 includes control program, OS (operating system) program and various other programs, operation set value in the photographing unit 13, image data of the photographed image, input character data and the like The operation set value in the photographing unit 13 includes value of white balance set in time of device shipment or in time of maintenance, various parameter values related to image processing when adjusting contrast etc. of the photographed image, and the like. The details of the storage unit 21 will be hereinafter described.

The voice output unit 22 converts the voice data from the controller 20 to sound wave and outputs the sound wave to the outside. Specifically, the voice output unit 22 includes D/A converter, speaker, earphone etc. The voice input unit 23 converts the externally input sound wave to voice data, and transmits the voice data to the controller 20. Specifically, the voice input unit 23 includes microphone, A/D converter etc.

The telephone communication unit 24 performs wireless communication with the base station in the portable telephone system. That is, the portable communication unit 24 converts the communication data from the controller 20 to a form suited to wireless communication, and transmits the converted wireless signal to the base station via the telephone antenna 24a. The telephone communication unit 24 converts the wireless signal received from the base station via the telephone antenna 24a to communication data, and transmits the communication data to the controller 20.

In the present embodiment, the controller 20 includes the face authentication unit 30 for performing face authentication to check the user him/herself. FIG. 1 shows the schematic configuration of the face authentication unit 30 and various data stored by the storage unit 21 and used by the authentication unit 30. As shown in the figure, the face authentication unit 30 has a configuration including a face image acquiring section 31, a face image checking section 32, a position information acquiring section (position information acquiring unit) 33, a date and time information acquiring section (time information acquiring unit) 34, a threshold value determining section (threshold value determining unit) 35, an authenticating section 36 and an authentication result output section (output unit) 37. The storage unit 21 stores a face feature DB (database) 40, an evaluation DB (factor DB) 41, an authentication history DB 42, and an authentication log 43.

The details of the data 40 to 43 stored in the storage unit 21 will be described first. The face feature DB 40 includes face feature information or information necessary in face authentication. The face authentication DB 40 includes face to be authenticated, or feature value data for each person to be authenticated. The feature value data to be stored in the storage unit 21 depends on the face authentication technique used.

The evaluation DB 41 includes evaluation value or numerical value evaluating the possibility the person (stranger) other than the person in question possesses the portable telephone 10 as factor information or information that acts as the factor in determining the threshold value. The evaluation DB 41 includes evaluation value for each position and each period of time the authentication is performed. The details of the evaluation DB 41 will be hereinafter described.

The authentication history DB 42 includes position information and date and time information of when authentication was successful as history information. The authentication history DB 42 may include only the position information (last authenticated position information) and the date and time information (last authenticated time information) of when the authentication was successful the last time as the history information. Furthermore, the authentication log 43 includes the date and time information of when the authentication was performed, and the success and failure of the relevant authentication in order of time.

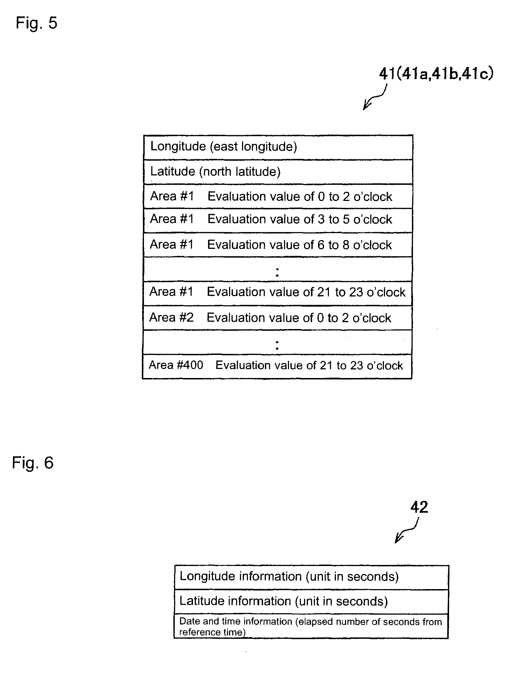

FIG. 6 shows one example of the data structure of the authentication history DB 42. As shown in the figure, the authentication history DB 42 stores latitude information and longitude information as the position information of when the authentication was successful the last time in units of seconds, and the date and time information of when the authentication was successful the last time in elapsed number of seconds from the reference time. The latitude information, the longitude information and the date and time information are respectively stored in the authentication history DB 42 in four bytes.

Each section 31 to 37 of the face authentication unit 30 will now be described in detail. The face image acquiring section 31 instructs the photographing unit 13 to acquire the photographed images of the subject, and acquires the face image to be checked from the acquired photographed images. The known face recognizing technique such as detecting the skin color region, detecting the outline of the face, or detecting the feature point of the face is used in acquiring the face image. The face image acquiring section 31 transmits the data of the acquired face image to the face image checking section 32.

The face image checking section 32 uses the known face authentication technique to extract the feature information of the face from the face image acquired by the face image acquiring section 31, and checks the extracted feature information and the face feature information stored in the face feature DB 40 of the storage unit 21. The face image checking section 32 calculates the matching degree indicating the degree of matching with respect to the face feature information of the face feature DB 40 as a result of checking, and transmits the matching degree to the authenticating section 36. The unique face method, LFA (Local Feature Analysis) method, graph matching method, neural network method, constrain mutual portion space method, perturbation space method, and frequency analysis method are examples of the face authentication technique.

The position information acquiring section 33 acquires the position information indicating the current position of the portable telephone 10 from the GPS receiver 14. The position information acquiring section 33 transmits the acquired position information to the threshold value determining section 35.

The date and time information acquiring section 34 acquires the date and time information indicating the current date and time from the calendar clock 15. The date and time information acquiring section 34 transmits the acquired date and time information to the threshold value determining section 35 and the authentication result output section 37. The date and time information acquiring section 34 may acquire the current date and time information from the GPS receiver 14 using the GPS.

The threshold determining section 35 determines the threshold value of the matching degree using the current position information (authenticated position information) from the position information acquiring section 33, the current date and time information (authenticated time information) from the date and time information acquiring section 34, the position information (last authenticated position information) and the date and time information (last authenticated time information) in the last authentication contained in the authentication history DB 42, and the evaluation DB 41. The threshold value determining section 35 transmits the determined threshold value to the authenticating section 36. The details of the threshold value determining section 35 will be hereinafter described.

The authenticating section 36 determines success and failure of the authentication. The authenticating section 36 transmits the authentication result indicating success and failure of the authentication to the authentication result output section 37.

Specifically, the authenticating section 36 compares the matching degree from the face image checking section 32 and the threshold value from the threshold value determining section 35. If the matching degree is greater than or equal to the threshold value as a result of comparison, the authenticating section 36 assumes that the feature information of the face image photographed by the photographing unit 13 matches the face feature information in the face feature DB 40, and determines that authentication was successful. If the matching degree is smaller than the threshold value, the authenticating section 36 assumes that the feature information of the face image photographed by the photographing unit 13 does not match the face feature information in the face feature DB 40, and determines that authentication has failed.

The authentication result output section 37 outputs the authentication result in the authenticating section 36. Specifically, the authentication result output section 37 displays the authentication result on the display unit 12. The authentication result output section 37 acquires the date and time the authenticating section 36 performed the authentication from the date and time information acquiring section 34 as the authenticated date and time regardless of whether or not the authentication was successful, and stores the information of the authenticated date and time and the authentication result in the authentication log 43.

If authentication was successful, the authentication result output section 37 acquires the position the authenticating section 36 performed the authentication from the position information acquiring section 33 as authenticated position, and stores the information of the authenticated position and the authenticated date and time in the authentication history DB 42. If authentication has failed, the authentication result output section 37 acquires the face image from the face image acquiring section 31, and transmits the information of the acquired face image, the authentication result, the authenticated position and the authenticated date and time to a predetermined server via the telephone communication unit 24. The investigation of when spoofing is carried out is thereby easily performed and early detection and prevention of spoofing can be anticipated.

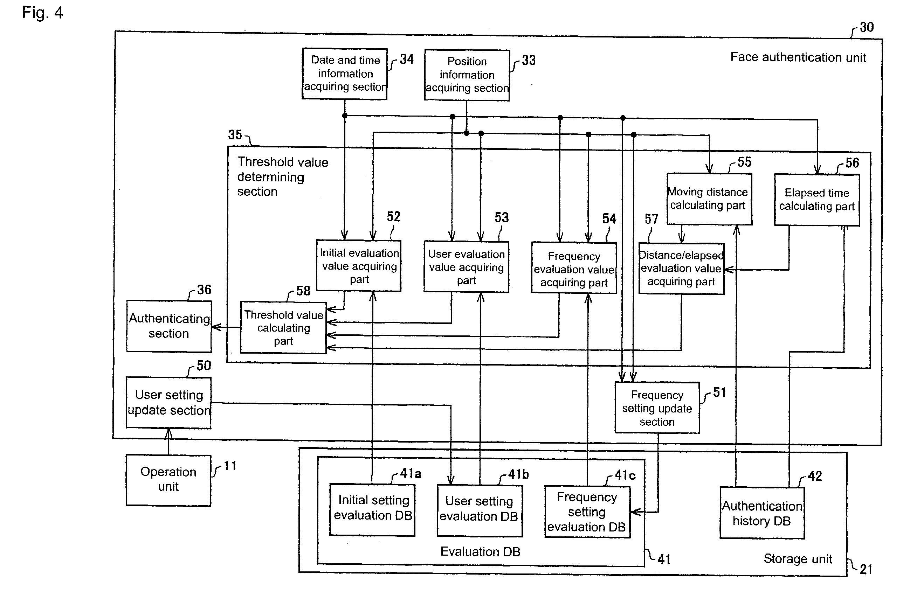

Details on the threshold value determining section 35 and the evaluation DB 41 will now be described with reference to FIGS. 4 to 6. FIG. 4 shows a schematic configuration of the threshold value determining section 35 and the evaluation DB 41, and the configuration related to the threshold value determining section 35 and the evaluation DB 41. The evaluation DB 41 will be described in detail first. As shown in FIG. 4, the evaluation DB 41 includes an initial setting evaluation DB 41 a, a user setting evaluation DB 41 b, and a frequency setting evaluation DB 41c. Although not shown in FIG. 1, the face authentication unit 30 includes a user setting update section (update unit) 50, and a frequency setting update section (update unit) 51.

The initial setting evaluation DB 41 a includes the evaluation value set by a manufacturing company of the portable telephone 10 or the telecommunication company for each position and period of time the authentication is performed. Generally, the occurrence frequency of an accident caused by spoofing differs among regions. The initial setting evaluation DB 41 a is initialized in time of shipment based on general information so that a reasonable evaluation value of a certain degree can be acquired for each position and period of time the authentication is performed even if the user does not set the evaluation value.

The update of the evaluation value of the initial setting evaluation DB 41 a can be performed via the communication network and the telephone communication unit 24, or can be performed by updating the firmware in the manufacturing company or the store of the telecommunication company.

The user setting evaluation DB 41 b includes the evaluation value set by the user for each position and period of time the authentication is performed. That is, the evaluation value in the user setting evaluation DB 41 b is a variable value that can be set by the user. The evaluation value of the user setting evaluation DB 41 b is updated by the user setting update section 50 based on the operation of the operation unit 11 by the user. Therefore, the value can be changed to the evaluation value that complies with the behavior of the user.

The frequency setting evaluation DB 41 c includes the evaluation value set based on the frequency the portable telephone 10 has moved to the relevant position for each position and period of time the authentication is performed. That is, the evaluation value in the frequency setting evaluation DB 41 c is a variable value that changes according to the movement history of the portable telephone 10. The evaluation value of the frequency setting evaluation DB 41 c is updated by acquiring the current position information and the date and time information from the position information acquiring section 33 and the date and time information acquiring section 34 at a predetermined timing by the frequency setting update section 51, and subtracting the evaluation value corresponding to the acquired position information and the date and time information by a predetermined number. Therefore, the evaluation value can be automatically changed to the evaluation value that complies with the behavior of the user without placing a burden on the user.

FIG. 5 shows one example of the date structure common to the evaluation DB 41a to 41c. In the present example, that which is segmented as below is used as the position of performing the authentication. First, on the assumption that use is made in Japan, the entire Japan is divided into a mesh form of every latitude of one degree and longitude of one degree. The divided region is referred to as "bank". The bank corresponds to a region about 90km in the longitude direction and about 110km in the latitude direction near Japan.

Each bank is further divided into a mesh form of every latitude of three minutes and longitude of three minutes. That is, each bank is divided into a total of 400 of twenty in the latitude direction and twenty in the longitude direction. The divided small region is hereinafter referred to as "area".

Regarding each area, one day is further divided by three hours. The evaluation value is stored for each divided period of time. That is, eight evaluation values are stored in each evaluation DB 41 a to 41 c with respect to each area.

A shown in FIG. 5, each evaluation DB 41 a to 41 c includes latitude information and longitude information of the bank and evaluation value for each area and each period of time with respect to each bank. That is, the DB 41 includes 8 x 400 = 3200 evaluation values per one bank. Each evaluation value is stored in evaluation DB 41 at a numerical value (-128 to 127) of one byte expressed by twos complement.

The evaluation value is retrieved from each evaluation DB 41 a to 41 c in the following manner. That is, the bank containing the current position is first searched for based on the longitude information and the latitude information at the head of each bank data. If the relevant bank is found as a result of the search, the evaluation value corresponding to the current area in the relevant bank and the current time is retrieved.

A specific example for the frequency setting update section 51 to update the frequency setting evaluation DB 41 c is as follows. That is, the frequency setting evaluation DB 41 c has the evaluation value of the entire area set at the maximum value (127) in time of shipment. When the portable telephone 10 retains in the same area for five or more minutes, the frequency setting update section 51 performs update of subtracting the evaluation value of the relevant area by-1. If the evaluation value is a minimum value (-128), the update is not performed.

Next, threshold value determining section 35 will now be described in detail with reference to FIG. 4. As shown in the figure, the threshold value determining section 35 has a configuration including an initial evaluation value acquiring part 52, a user evaluation value acquiring part 53, a frequency evaluation value acquiring part 54, a moving distance calculating part 55, an elapsed time calculating part 56, a distance/elapsed evaluation value acquiring part 57, and a threshold value calculating part 58.

The initial evaluation value acquiring part 52 acquires the current position information and the date and time information from the position information acquiring section 33 and the date and time information acquiring section 34, searches for the evaluation value corresponding to the acquired current position information and the date and time information from the initial setting evaluation DB 41 a and acquires the relevant evaluation value as the initial evaluation value. The initial evaluation value acquiring part 52 transmits the acquired initial evaluation value to the threshold value calculating part 58.

The user evaluation value acquiring part 53 searches for the evaluation value corresponding to the current position information and the date and time information acquired as above from the user setting evaluation DB 41 b and acquires the relevant evaluation value as the user evaluation value. The user evaluation value acquiring part 53 transmits the acquired user evaluation value to the threshold value calculating part 58.

The frequency evaluation value acquiring part 54 searches for the evaluation value corresponding to the current position information and the date and time information acquired as above from the frequency setting evaluation DB 41 c and acquires the relevant evaluation value as the frequency evaluation value. The frequency evaluation value acquiring part 54 transmits the acquired frequency evaluation value to the threshold value calculating part 58.

The moving distance calculating part 55 acquires the current position information from the position information acquiring section 33 and acquires the position information of when the authentication was successful the last time from the authentication history DB 42, and calculates the distance moved from the position of when the authentication was successful the last time. The moving distance calculating part 55 transmits the calculated moving distance information to the distance/elapsed evaluation value acquiring part 57.

The elapsed time calculating part 56 acquires the current date and time information from the date and time information acquiring section 34 and acquires the date and time information of when the authentication was successful the last time from the authentication history DB 42, and calculates the time elapsed from the date and time of when the authentication was successful the last time. The elapsed time calculating part 56 transmits and calculated elapsed time information to the distance/elapsed evaluation value acquiring part 57.

The distance/elapsed evaluation value acquiring part 57 calculates the evaluation value based on the moving distance information from the moving distance calculating part 55 and the elapsed time information from the elapsed time calculating part 56, and acquires the relevant evaluation value as the distance/elapsed evaluation value. The distance/elapsed evaluation value acquiring part 57 transmits the acquired distance/elapsed evaluation value to the threshold value calculating part 58.

Specific processes in the moving distance calculating part 55, the elapsed time calculating part 56, and the distance/elapsed evaluation value acquiring part 57 are as described below. The moving distance calculating part 55 calculates the latitude difference obtained by subtracting the latitude acquired from the authentication history DB 42 from the current latitude acquired from the position information acquiring section 33 in units of seconds, and calculates the longitude difference obtained by subtracting the longitude acquired from the authentication history DB 42 from the current longitude acquired from the position information acquiring section 33 in units of seconds. The elapsed time calculating part 56 calculates the elapsed time obtained by subtracting the time and date acquired from the authentication history DB 42 from the current date and time acquired from the date and time information acquiring section 34 in units of seconds.

Next, the distance/elapsed evaluation value acquiring part 57 converts the latitude difference and the longitude difference calculated by the moving distance calculating part 55 to time. This conversion is performed with one second in angle as fifteen seconds in time. The distance/elapsed evaluation value acquiring part 57 then amounts the magnitude of the latitude difference converted to time, the magnitude of the longitude difference converted to time, and the elapsed time calculated by the elapsed time calculating part 56, and calculates the total value (second). The distance/elapsed evaluation value acquiring part 57 subtracts 256 from the calculated total value and divides the result by two so as to take a numerical value (-128 ~127) of one byte expressed by twos complement, similar to the other evaluation values, and the maximum value is clipped to 127, that is, the value of greater than or equal to 127 is assumed as 127 to obtain the distance/elapsed evaluation value.

The threshold value calculating part 58 calculates the threshold value based on the initial evaluation value from the initial evaluation value acquiring part 52, the user evaluation value from the user evaluation value acquiring part 53, the frequency evaluation value from the frequency evaluation value acquiring part 54, and the distance/elapsed evaluation value from the distance/elapsed evaluation value acquiring part 57. The threshold value calculating part 58 transmits the calculated threshold value to the authenticating section 36.

The specific processes in the threshold value calculating part 58 are as follows. The range of the threshold value and the matching degree is between 0 and 1000, and the average threshold value in time of authentication is 500. If the threshold value is large, the matching degree necessary for the authentication to be successful becomes large, and thus authentication becomes strict. On the other hand, if the threshold value is small, the matching degree necessary for the authentication to be successful becomes small, and thus authentication becomes lenient.

The specific processes in the threshold value calculating part 58 are as follows. That is, the threshold value calculating part 58 calculates an average evaluation value by averaging all the evaluation values, that is, the initial evaluation value, the user evaluation value, the frequency evaluation value, and the distance/elapsed evaluation value. The threshold value calculating part 58 then doubles the calculated average evaluation value and adds 500 to obtain the threshold value within the range of the threshold value of 0 to 1000. That is, the threshold value takes a value between 244 and 754. The threshold value calculating part 58 may perform averaging after weighing each evaluation value.

Therefore, in the portable telephone 10 of the present embodiment, the threshold value calculating part 58 calculates the threshold value using the evaluation values acquired by the user evaluation acquiring part 53 and the frequency evaluation value acquiring part 54. The distance/elapsed evaluation value acquiring unit 57 calculates the evaluation value based on the position and the distance in time of the last authentication, and the threshold value calculating part 58 calculates the threshold value using the calculated evaluation values. The threshold value that follows the behavior of the user is thereby obtained. Spoofing is thus effectively prevented and convenience is maintained at satisfactory accuracy.

The user of the portable telephone 10 may be one or may be a plurality of people. If there is a plurality of users, the DB that depends on each user, that is, the user setting evaluation DB 41 b and the frequency setting DB 41 c are desirably created for each user and stored in the storage unit 21.

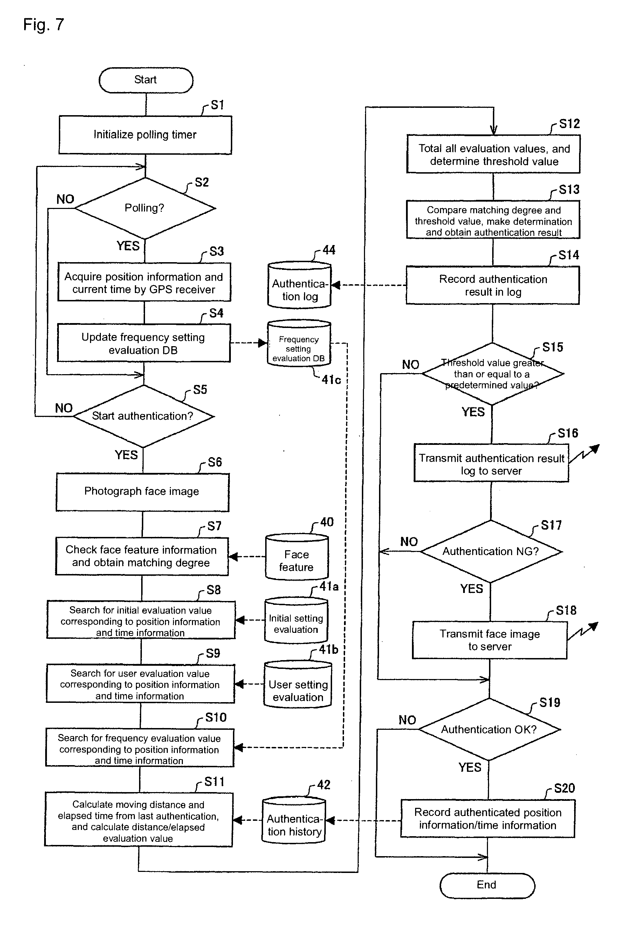

FIG. 7 shows a processing operation in the portable telephone 10 of the above configuration. As shown in the figure, a polling timer is first initialized (step S1. Hereinafter sometimes referred to simply as "S1 ". This applies to other steps).

If polling exists (YES in S2), the current position information and the date and time information are acquired by the GPS receiver 14 and the calendar clock 15 (S3), and the frequency setting evaluation DB 41 c is updated based on the acquired information (S4). The processes (S2 to S4) are continued until authentication is started (NO in S5).

When authentication is started (YES in S5), the photographing unit 13 takes photographs, and the face image acquiring section 31 acquires the face image (S6). The face image checking section 32 then extracts the feature information of the face from the face image to check the feature information with the face feature information stored in the face feature DB 40, and calculates the matching degree (S7).

Regarding the initial evaluation value, the user evaluation value, and the frequency evaluation value corresponding to the current position information acquired by the position information acquiring section 33 and the current time information acquired by the date and time information acquiring section 34, the initial evaluation value acquiring part 52 searches the initial setting evaluation DB 41 a to acquire the relevant evaluation value (S8), the user evaluation value acquiring part 53 searches the user setting evaluation DB 41 b to acquire the relevant evaluation value (S9), and the frequency evaluation value acquiring part 54 searches the frequency setting evaluation DB 41 c to acquire the relevant evaluation value (S10).

Next, the moving distance calculating part 55 calculates the moving distance from the position of when the authentication was successful the last time based on the current position information acquired by the position information acquiring section 33 and the position information of when the authentication was successful the last time stored in the authentication history DB 42 (S11). Further, the elapsed time calculating part 56 calculates the elapsed time from the date and time of when the authentication was successful the last time based on the current date and time information acquired by the date and time information acquiring section 34 and the date and time information of when the authentication was successful the last time stored in the authentication history DB 42 (S11). The distance/elapsed evaluation value is calculated based on the moving distance calculated by the moving distance calculating part 55 and the elapsed time calculated by the elapsed time calculating part 56 (S11). Steps S8, S9, S10 and S11 may be performed in an arbitrary order or may be performed simultaneously.

The threshold value calculating part 58 then totals the initial evaluation value, the user evaluation value, the frequency evaluation value, and the distance/elapsed evaluation value, and calculates the threshold value (S12). The authenticating section 36 then compares the matching degree calculated by the face image checking section 32 and the threshold value calculated by the threshold value calculating part 58 to determine success and failure of the authentication, obtains the authentication result (S13), and records the authentication result in the authentication log 44 (S14).

If the threshold value is greater than or equal to a predetermined value (S15), the log of the authentication result is transmitted to the external server via the telephone communication unit 24 (S16). The predetermined value is desirably 500, which is the average threshold value in authentication. If authentication has failed as a result of the authentication (YES in S17), the face image acquired by the face image acquiring section 31 is transmitted to the external server via the telephone communication unit 24 (S18).

If authentication was successful as a result of the authentication (YES in S19), the information on the authenticated position and the authenticated date and time are stored in the authentication history DB 42 (S20). The stored information on the authenticated position and the authentication date and time are used in the subsequent authentication. The processing operation is thereafter terminated.

The present invention is not limited to the embodiment described above, and various modifications may be made within the scope defined in the claims. That is, the embodiments obtained by combining the technical devices appropriately changed within the scope defined in the claims are also encompassed in the technical scope of the present invention.

For example, the face authentication is used as the authentication devices in the embodiment, but other living body authentications such as fingerprint authentication, vein authentication etc. may be used. In this case, the threshold value is set at the matching degree of the living body authentication used. Since most of the recent portable telephones 10 have a photographing function, it is advantageous to use face authentication rather than other living body authentications in that hardware for living body authentication does not need to be newly added.

The authentication techniques other than the living body authentication may also be used. For example, a plurality of questions that only the user has the answer to may be asked, and the threshold value may be set to the percentage of the questions answered correctly.

The present invention is applied to the portable telephone 10 in the above embodiment, but the present invention is applicable to an arbitrary electronic equipment that can perform the living body authentication, the electronic equipment being transported by a moving body such as portable electronic equipments including PDA (Personal Digital Assistant), a notebook PC (Personal Computer), a portable DVD etc., electronic equipment mounted on the vehicle, and the like.

The current position information and date and time information of the portable telephone 10 are used in the above embodiment, but the date and time information may be omitted. In this case, the configuration related to the date and time information may be omitted. The effects of effectively preventing spoofing and maintaining convenience of the user slightly lower in this case. However, since the evaluation DB 41 does not need to store the evaluation value for every period of time, the number of evaluation values to be stored can be reduced to one eighth. Furthermore, the elapsed time calculating part 56 can be omitted. Therefore, the configuration of the portable telephone 10 can be simplified.

Finally, each block of the portable telephone 10, in particular the controller 20, may be configured by hardware logic, or may be realized by software using the CPU as described below.

That is, the portable telephone 10 includes a CPU (Central Processing Unit) for executing the command of the control program for realizing each function, a ROM (Read Only Memory) for storing the program, a RAM (Random Access Memory) for expanding the program, a storage device (recording medium) such as memory for storing the program and various data etc. The object of the present invention is also realized by supplying the recording medium, on which the program code (executable format program, intermediate code program, source program) of the control program of the portable telephone 10 or the software for realizing the above described function is computer readably recorded, to the portable telephone 10 and having the computer (or CPU or MPU) read and execute the program code stored on the recording medium.

The recording medium used may be tapes such as magnetic tape and cassette tape; discs including magnetic discs such as floppy disc ®/hard disc and optical disc such as CD-ROM/MO/MD/DVD/CD-R; cards such as IC card (include memory card)/optical card; semiconductor memories such as mask ROM/EPROM/EEPROM/flash ROM etc.

The portable telephone 10 may be configured connectable to a communication network, and the program code may be supplied through the communication network. The communication network is not particularly limited, and internet, intranet, extranet, LAN, ISDN, VAN, CATV communication network, virtual private network, telephone line, mobile communication network, satellite communication network and the like may be used. The transmission medium configuring the communication network is not particularly limited, and wired medium such as IEEE 1394, USB, power line carrier, cable TV line, telephone line, ADSL line; and wireless medium such as infrared line such as IrDA and remote controller, Bluetooth ®, 802.11 wireless, HDR, portable telephone network, satellite line, terrestrial digital network and the like may be used. The present invention can be realized in the form of computer data signal embedded in the carrier wave in which the program code is realized in electronic transmission.

Therefore, the authentication device according to the present invention effectively prevents spoofing and maintains convenience of the user by changing the threshold value of the authentication according to the position of its own device, whereby the authentication device according to the present invention is applicable to an arbitrary electronic equipment that can be transported by the moving body such as portable electronic equipment, vehicle mounted electronics equipment etc.

## Claims

1. An authentication device for determining success and failure of the authentication based on authentication input information input from a person to be authenticated according to a threshold value; the authentication device comprising:
a position information acquiring unit for acquiring position information of the own device; and
a threshold value determining unit for acquiring authenticated position information or position information of the own device when the authentication input information is input from the position information acquiring unit, and determining the threshold value based on the acquired authenticated position information.

2. The authentication device according to claim 1, further comprising:
a storage unit for storing a factor DB that manages factor information or information acting as factors when the threshold determining unit determines the threshold value in association with the position information of the own device; wherein
the threshold value determining unit acquires the authenticated position information from the position information acquiring unit, acquires the factor information corresponding to the acquired authenticated position information from the factor DB, and determines the threshold value using the acquired factor information.

3. The authentication device according to claim 2, further comprising an update unit for updating the factor information in the factor DB.

4. The authentication device according to claim 3, wherein the update unit updates the factor information associated with the position information of the own device to factor information reflecting the frequency the own device has visited the position.

5. The authentication device according to claim 1, further comprising:
a storage unit for storing last authenticated position information indicating the position the authentication was successful the last time; wherein
the threshold value determining unit acquires the authenticated position information from the position information acquiring unit, and determines the threshold value based on the acquired authenticated position and a distance from the last authenticated position stored in the storage unit.

6. The authentication device according to claim 1, further comprising time information acquiring unit for acquiring time information; wherein
the threshold value determining unit acquires the authenticated position information from the position information acquiring unit, acquires authenticated time information indicating input time of the authentication input information from the time information acquiring unit, and determines the threshold value based on the acquired authenticated position information and the authenticated time information.

7. The authentication device according to claim 6, further comprising a storage unit for storing last authenticated position information and last authenticated time information indicating position and time the authentication was successful the last time; wherein
the threshold value determining unit acquires the authenticated position information and the authenticated time information from the position information acquiring unit and the time information acquiring unit, and determines the threshold value based on distance between the acquired authenticated position and last authenticated position, and time period between the acquired authenticated time and last authenticated time.

8. The authentication device according to claim 1, further comprising an output unit for outputting at least one of result information of the authentication and the authentication input information.

9. An electronic equipment transported by a moving body, the electronic equipment comprising the authentication device according to any one of claims 1 to 8.

10. A method of controlling an authentication device for determining success and failure of authentication based on authentication input information input from a person to be authenticated according to a threshold value; the method comprising the steps of:
acquiring authenticated position information or position information of own device when the authentication input information is input; and
determining the threshold value based on the acquired authenticated position information.

11. An authentication device control program for operating the authentication device according to any one of claims 1 to 8, the authentication device control program functioning a computer as each unit.

12. A computer readable recording medium recorded with the authentication device control program according to claim 11.
